# EUROPÄISCHE PATENTSCHRIFT

(11) **EP 1 358 057 B1**
(45) Veröffentlichungstag und Bekanntmachung des Hinweises auf die Patenterteilung: **08.12.2004**
(21) Anmeldenummer: 02716684.2
(22) Anmeldetag: 24.01.2002
(51) Int. Cl.: B29C 45/68

(54) **LINEARANTRIEBSEINRICHTUNG ZUM ÖFFNEN UND SCHLIESSEN VON FORMWERKZEUGEN SOWIE AUFBRINGEN EINER SCHLIESSKRAFT HIERAUF**
LINEAR DRIVE DEVICE FOR OPENING AND CLOSING MOLDING TOOLS AND FOR APPLYING A CLOSING FORCE THEREON
DISPOSITIF D'ENTRAINEMENT LINEAIRE POUR L'OUVERTURE ET LA FERMETURE D'OUTILS DE MOULAGE ET POUR L'APPLICATION D'UNE FORCE DE FERMETURE SUR CES OUTILS

(30) Priorität: 30.01.2001 DE 10103983; 08.05.2001 DE 10122260
(43) Veröffentlichungstag der Anmeldung: 05.11.2003
(73) Patentinhaber: Krauss-Maffei Kunststofftechnik GmbH, 80997 München (DE); Mannesmann Plastics Machinery GmbH, 80997 München (DE)
(72) Erfinder: WOHLRAB, Walter, 91781 Weissenburg (DE); OSTHOLT, Rüdiger, 58300 Wetter (DE); MEYER, Ralf, Ingo, 58300 Wetter (DE); BECKER, Klaus, 58300 Wetter (DE)
(74) Vertreter: Zollner, Richard, Dipl.-Phys.
(86) Internationale Anmeldenummer: PCT/EP2002/000724
(87) Internationale Veröffentlichungsnummer: WO 2002/062557

(56) Entgegenhaltungen:
- WO-A-88/09256
- DE-A- 1 458 215
- FR-A- 2 358 266
- PATENT ABSTRACTS OF JAPAN vol. 1997, no. 6, 30. Juni 1997 (1997-06-30) -& JP 09 029802 A (TOSHIBA MACH CO LTD), 4. Februar 1997 (1997-02-04) -& DATABASE WPI Week 199715 Derwent Publications Ltd., London, GB; AN 1997-160380 XP002200121 & JP 09 029802 A
- PATENT ABSTRACTS OF JAPAN vol. 01, no. 186 (M-1585), 30. März 1994 (1994-03-30) & JP 05 345340 A (SODICK CO LTD), 27. Dezember 1993 (1993-12-27)

## Beschreibung

Die Erfindung betrifft eine Linearantriebseinrichtung zum Öffnen und Schließen von Formwerkzeugen sowie Aufbringen einer Schließkraft hierauf, insbesondere von Formwerkzeughälften einer Kunststoffformmaschine, gemäß dem Oberbegriff des Anspruchs 1.

Aus der europäischen Patentanmeldung EP 0 976 521 A1 ist eine Schließeinrichtung für Formaufspannplatten einer Spritzgießmaschine bekannt. Die Spritzgießmaschine weist eine feststehende Formaufspannplatte sowie eine verschiebbare Formaufspannplatte auf, an deren einander zugewandten Seiten jeweils Hälften eines Formwerkzeuges aufgespannt sind. Die feststehende Formaufspannplatte ist über vier in den Ecken eines gedachten Viereckes angeordnete Holme mit einer ebenfalls feststehenden Klemmplatte verbunden. Die bewegliche Formaufspannplatte ist entlang der Holme zwischen der feststehenden Formaufspannplatte und der Klemmplatte verschiebbar. Für die Bewegung der verschiebbaren Formaufspannplatte ist an deren der Aufspannfläche für das Formwerkzeug abgewandten Seite ein Stempel befestigt, der sich in Richtung der ortsfesten Klemmplatte sowie durch diese hindurch erstreckt. Für das Bewegen der beweglichen Formaufspannplatte entlang der Holme, d. h. für das Öffnen und Schließen der Formwerkzeuge, ist ein elektromotorischer Antrieb vorgesehen, der an dem Stempel angreift. Nach dem Schließen der Formwerkzeuge erfolgt das Aufbringen der Schließkraft auf die Hälften des Formwerkzeuges über eine ebenfalls an dem Stempel angreifende hydraulische Kolben-/Zylindereinheit.

Der elektromotorische Antrieb ist als Spindeltrieb ausgebildet. Hierfür ist der Stempel als Hohlachse mit einem Innengewinde für eine Spindel ausgebildet.

Die Kolben-/Zylindereinheit weist einen Ringkolben auf, durch den die Spindel geführt ist, und der mit der Außenseite des Stempels über eine Kupplung für das Aufbringen der Schließkraft verbindbar ist. Der Ringkolben ist in einem ebenfalls ringförmigen und in der Klemmplatte ausgebildeten Zylinderraum geführt und entsprechenderweise weitestgehend parallel zu dem Stempel bewegbar. Um auch ein Aufreißen der Hälften des Formwerkzeuges nach dem erfolgten Spritzvorgang zu ermöglichen, ist die Kolben-/Zylindereinheit doppelwirkend ausgebildet.

Die Kupplung zwischen der Kolben-/Zylindereinheit und der äußeren Umfangsfläche des Stempels erfolgt über eine Außenverzahnung auf der Umfangsfläche des Stempels und einer korrespondierend ausgebildeten Innenverzahnung an der inneren Umfangsfläche der Öffnung des ringförmigen Kolbens. In Umfangsrichtung gesehen ist die Innen- und auch die Außenverzahnung mehrmals und gleichmäßig auf den Umfang verteilt durch parallel zur Längserstreckung des Stempels verlaufende Nuten unterbrochen. Somit können durch Drehung des Kolbens der Kolben-/Zylindereinheit innerhalb des Zylinderraums die Zähne der Innenverzahnung mit den Zähnen der Außenverzahnung in Eingriff gebracht werden sowie durch zurückdrehen, die Zähne der Innen- bzw. Außenverzahnung in die jeweilige Nut der Innen- bzw. Außenverzahnung gestellt werden, so dass der Stempel von dem Kolben entkoppelt ist. Für die erforderliche Drehbewegung für den Kupplungsvorgang ist eine weitere hydraulische Kolben-/Zylindereinheit oder ein Servomotor vorgesehen.

Aus dieser europäischen Patentanmeldung ist zwar bereits der kombinierte hydraulische und elektromotorische Antrieb des Stempels einer beweglichen Formaufspannplatte einer Spritzgießmaschine bekannt, jedoch ermöglicht die Ausgestaltung der Kupplung mit einer jeweils in Längsrichtung der Spindel verlaufende Nuten aufweisende Innen- bzw. Außenverzahnung nur ein Kuppeln bzw. Entkuppeln in bestimmten diskreten Ausfahr- bzw. Drehstellungen der Spindel. Somit ist es erforderlich, die Schließbewegung der Formwerkzeuge in Abhängigkeit von der Stellung der Spindel zu beenden, um anschließend überhaupt ein Einkuppeln der Innenverzahnung in die Außenverzahnung zu ermöglichen. Anschließend muss dann zunächst die restliche Schließbewegung der beiden Formwerkzeuge über dem Kolben-/Zylinderantrieb vorgenommen werden. Nachteiligerweise führt dies zu einer Vergrößerung des erforderlichen Hubes der Kolben-/Zylindereinheit und der hiermit einhergehenden Vergrößerung des erforderlichen Ölvolumens.

Aus der EP 0 381 107 B1 ist ferner eine Schließeinheit bekannt, bei der die Öffnungsund Schließbewegung der beweglichen Formaufspannplatte mittels eines Kugelspindelantriebes bewerkstelligt wird, der jeweils an den als Spindel ausgebildeten Enden von Holmen montiert ist, mit denen die Formaufspannplatten verbunden sind. Der Schließdruck wird dabei von einer in einer Formaufspannplatte angeordneten hydraulischen Kolben-/Zylindereinheit erzeugt, wobei sich der Schließdruck jeweils über die an den Enden der Holme angeordneten Kugelspindelantriebe abstützt. Aufgrund der Tatsache, dass die Abstützung der beträchtlichen Schließkräfte stets über die Kugeln des Kugelspindelantriebes und damit über nur nahezu punktförmige Aufstandsflächen zwischen Kugeln und Gewinderillen erfolgt, ist der Kugelspindeltrieb erheblichen Belastungen ausgesetzt. Der an sich für die Durchführung schneller Stellbewegungen bei geringer Belastung bewährte Kugelspindelantrieb ist somit wenig geeignet, im statischen Belastungsfall den extrem hohen Schließkräften einer Spritzgießmaschine standzuhalten.

Aus der JP-A-09029802 ist eine Schließeinrichtung für eine Spritzgießmaschine beschrieben, bei der zwei Spindeln verwendet werden. Eine erste kleinere Spindel wird rotatorisch angetrieben und wirkt mit einem Innengewinde einer zweiten Spindel, die als Mutter wirkt, zusammen. Die zweite Spindel wiederum besitzt an Ihrem Außenumfang Schraubenwindungen, die mit einer weiteren Mutter zusammenwirken. Die zweite, größere Spindel wiederum ist fest mit einer beweglichen Aufspannplatte verbunden.

Der vorliegenden Erfindung liegt die Aufgabe zugrunde, eine Linearantriebseinrichtung zum Öffnen und Schließen von Formwerkzeugen, insbesondere von Formwerkzeughälften einer Kunststoffformmaschine, zu schaffen, die ein schnelles Öffnen und Schließen der Formwerkzeuge und ein energieoptimiertes Aufbringen der Schließkraft auf die Formwerkzeuge ermöglicht..

Diese Aufgabe wird durch eine Linearantriebseinrichtung zum Öffnen und Schließen von Formwerkzeugen sowie Aufbringen einer Schließkraft hierauf, insbesondere von Formwerkzeughälften einer Kunststoffformmaschine, mit den Merkmalen des Anspruches 1 gelöst. Vorteilhafte Ausgestaltungen der Erfindung sind in den Ansprüchen 2 bis 26 angegeben.

Erfindungsgemäß wird bei einer Linearantriebseinrichtung zum Öffnen und Schließen von Formwerkzeugen sowie Aufbringen einer Schließkraft hierauf, insbesondere von Formwerkzeughälften einer Kunststoffformmaschine, mit einem auf die Formwerkzeuge wirkenden Spindeltrieb mit einer ersten Spindelmutter für ein Öffnen und Schließen der Formwerkzeuge, mit einer Spindel und mit einer auf die Formwerkzeuge wirkenden Kolben-/Zylindereinheit für das Aufbringen der Schließkraft, durch die Zuordnung der Kolben-/Zylindereinheit zu einer mit der Spindel unmittelbar zusammenwirkenden zweiten Spindelmutter erreicht, dass die im Verhältnis zu den erforderlichen Kräften für das Öffnen und Schließen der Formwerkzeuge relativ hohen Schließkräfte nicht in die erste Spindelmutter eingeleitet werden und diese somit optimal auf die Erfordernisse für ein Öffnen und Schließen der Formwerkzeuge angepasst werden kann. Durch die Verwendung einer zweiten Spindelmutter für die Übertragung der Schließkräfte nach erfolgter Schließbewegung der Formwerkzeuge über den Spindeltrieb kann in jeder beliebigen Stellung der Spindel und nicht nur bezogen auf diskrete Spindelstellungen die Kolben-/Zylindereinheit hiermit gekoppelt werden. Der Hubweg der Kolben-/Zylindereinheit kann somit minimiert werden und entsprechend die erforderliche Druckmittelmenge für den Kreislauf minimiert werden.

Besonders vorteilhaft wird die zweite Spindelmutter während des Öffnen und Schließen der Formwerkzeuge über die erste Spindelmutter kraftarm, vorzugsweise freilaufend, entlang der Spindel mitbewegt und kann somit ihre Nähe auf der Spindel zu der ersten Spindelmutter und zu der ortfesten Kolben-/Zylindereinheit halten. Hierfür weist die Spindel einen Gewindegang für die zweite Spindelmutter auf, dessen Gewinderille weiter ist als die Breite von Gewindezähnen der zweiten Spindelmutter. Bevorzugt ist die Spindel nach Art eines Stempels feststehend mit dem Formwerkzeug, d. h. mit deren Formaufspannplatte, verbunden, wodurch nur die Spindelmuttern die drehenden und anzutreibenden Teile sind.

Die Linearantriebseinrichtung wird konstruktiv besonders einfach und kompakt, wenn die Spindel zweigängig ausgebildet ist und neben einem Gewindegang für die zweite Spindelmutter einen weiteren Gewindegang für die erste Spindelmutter aufweist. Vorteilhafterweise ist die erste Spindelmutter und der zugehörige Gewindegang als Kugelgewindetrieb und die zweite Spindelmutter und der zugehörige Gewindegang als Flachgewindetrieb, vorzugsweise als Trapezgewindetrieb, ausgebildet. Der Kugelgewindetrieb zeichnet sich durch hohe geräusch- und veriustarme Verfahrgeschwindigkeiten, einen geringen Reibungswiderstand und eine hohe Positioniergenauigkeit aus. Der Flachgewindetrieb ist vorteilhafterweise selbsthemmend, wodurch die Aufrechterhaltung der Schließkraft unterstützt wird.

In konstruktiv besonders kompakter Bauweise besteht die Kolben-/Zylindereinheit im wesentlichen aus einem Kolben und einem Zylinderraum in einem Gehäuse, wobei der ringförmige Kolben einen hülsenförmigen Druckstempel aufweist, durch den die Spindel geführt ist. Angrenzend an den hülsenförmigen Druckstempel und in einem an dem Gehäuse angeordneten, hülsenförmigen Ansatz ist über Wälzlager die zweite Spindelmutter gelagert. Die zweite Spindelmutter ist hierbei zur Übertragung der Schließkraft von dem Druckstempel auf die Spindel in Längsrichtung der Spindel verschiebbar ausgebildet.

Für eine besonders einfache Übertragung des Drehmomentes von der zweiten Spindelmutter auf die erste Spindelmutter ist die erste Spindelmutter auf der Spindel mit einem geringen Abstand neben der zweiten Spindelmutter angeordnet und diese sind über Mitnahmeelemente miteinander verbunden. Die zweite Spindelmutter ist hierbei relativ zu der ersten Spindelmutter in Längsrichtung der Spindel verschiebbar, um bei Betätigung der Kolben-/Zylindereinheit und der hieraus resultierenden Verschiebung der zweiten Spindelmutter die erste Spindelmutter von der Schließkraft zu entkoppeln.

In konstruktiv einfacher Weise sind die Mitnahmeelemente als Stifte ausgebildet, von denen jeder mit seinen Enden in Bohrungen in den einander zugewandten Stirnflächen der ersten Spindelmutter und der zweiten Spindelmutter eingesteckt ist. Die Tiefe der Bohrungen und die Länge der Stifte sind so gewählt, dass, wie zuvor beschrieben, die zweite Spindelmutter relativ zu der ersten Spindelmutter in Längsrichtung der Spindel verschiebbar ist.

Vorteilhafterweise ist die erste Spindelmutter über Federelemente an der zweiten Spindelmutter abgestützt, wodurch eine Überlastung des Kugelgewindetriebes durch die Schließkraft vermieden werden kann. Die Federelemente sind vorteilhafterweise als Tellerfedem und somit raumsparend ausgebildet und zwischen der ersten Spindelmutter und der zweiten Spindelmutter angeordnet.

Der Antrieb der zweiten Spindelmutter und somit der ersten Spindelmutter zum Öffnen und Schließen der Formwerkzeuge erfolgt über eine an einer Stirnfläche der zweiten Spindelmutter angeordnete Zahnscheibe, die ihrerseits über einen Riemen angetrieben ist.

Bevorzugterweise ist die Kolben-/Zylindereinheit hydraulisch betreibbar.

Nach der Erfindung ergibt sich im weiteren der Vorteil, dass nach Abschluss des vom Kugelspindelantrieb bewerkstelligten Schließvorgangs und bei Einleitung der Schließkraft über die Schließeinheit, die Rückdrehung der ersten Spindelmutter nicht über gesondert anzusteuemde und diskrete Schaltabstände vorgebende Zahnhaltebremsen erfolgt, sondern selbständig beim Wirksamwerden der Schließkraft erfolgt, wobei temperaturbedingte Verformungen der Schließeinheit, wie sie bei der Inbetriebnahme einer Spritzgießmaschine auftreten, keine Rolle spielen.

Vorzugsweise bestehen die, die Kraftüberleitung von der Spindel auf die zweite Spindelmutter über eine lange Linienberührung sicherstellenden Eingriffsmittel aus einer Wendel, so dass die Kraftüberleitung nicht mehr über einzelne punktförmige Kugelaufstandsflächen sondern über eine mehrmals über den Umfang der Wendel verlaufende Linienaufstandsfläche erfolgt.

Nachfolgend wird die vorliegende Erfindung an Hand von in Zeichnungen dargestellten Ausführungsbeispielen nachfolgend näher erläutert. Es zeigen:
- Fig. 1: eine schematische Schnittansicht einer Linearantriebseinrichtung in einer ersten Ausführungsform,
- Fig. 2: eine Ausschnittsvergrößerung von Figur 1 aus dem Bereich zweier aneinander grenzender Spindelmuttern der Linearantriebseinrichtung,
- Fig. 3: eine schematische Perspektivansicht einer Linearantriebseinrichtung in einer prinzipiell bekannten Ausführungsform,
- Fig. 4: das Grundschema einer Schließeinheit einer Spritzgießmaschine, mit einer erfindungsgemäßen Linearantriebseinrichtung gemäß einem weiteren Ausführungsform,
- Fig. 5: einen Halbschnitt der in Fig. 4 mit A und B gekennzeichneten Teilbereiche in vergrößertem Maßstab mit dem Spindeltrieb bei Durchführung der Öffnungsbewegung,
- Fig. 5a: einen Detailausschnitt D aus Fig. 5,
- Fig. 6: die Darstellung nach Fig. 5 mit dem Spindeltrieb bei Durchführung der Schließbewegung,
- Fig. 6a: einen Detailausschnitt D aus Fig. 6,
- Fig. 7: die Darstellung nach Fig. 5 mit dem Spindeltrieb und der Schließdruckeinheit in der Funktion bei Schließdruck,
- Fig. 7a: einen Detailausschnitt aus Fig. 7 und
- Fig. 8: eine alternative Gestaltung der Eingriffsmittel nach Fig. 5a, 6a und 7a mit Gangprofilen in Form eines Trapezgewindes.

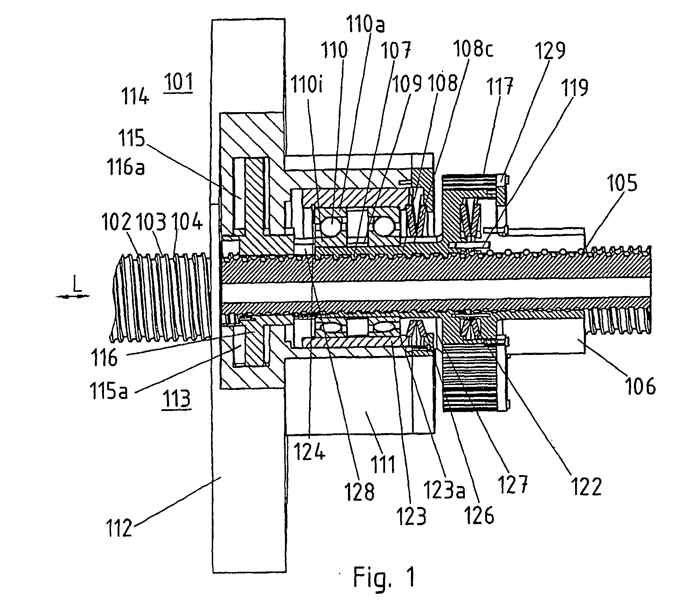

Die Figur 1 zeigt eine schematische Querschnittansicht einer Linearantriebseinrichtung 101 einer als Spritzgießmaschine ausgebildeten Kunststoffformmaschine. Die Linearantriebseinrichtung 101 weist eine Spindel 102 auf, die abschnittsweise dargestellt ist und deren linkes Ende fest in Funktion eines Druckstempels mit einer nicht dargestellten Formaufspannplatte einer Spritzgießmaschine verbunden ist, auf deren gegenüberliegender Seite eine Hälfte eines Formwerkzeuges aufgespannt ist. Die Spritzgießmaschine ist demnach als sogenannte Dreiplattenmaschine ausgebildet. Grundsätzlich kann die Spritzgießmaschine auch als sogenannte Zweiplattenmaschine ausgebildet werden, wobei dann die Spindel in der Schließstellung auf Zug belastet wird.

Die Spindel 102 ist zweigängig ausgebildet und somit entsprechend an ihrer äußeren Umfangsfläche mit einem ersten Gewindegang 103 und einem zweiten Gewindegang 104 versehen. Der erste Gewindegang 103 ist als wendelförmig um die Spindel 102 umlaufende Lauffläche für Kugeln 105 eines Kugelgewindetriebes mit einer als Kugelgewindemutter ausgebildeten Spindelmutter 106 ausgebildet. Der aus dem ersten Gewindegang 103, den Kugeln 105 und der ersten Spindelmutter 106 gebildete Kugelgewindetrieb dient zum schnellen Bewegen der Spindel 102 in deren Längsrichtung L und somit zum Öffnen und Schließen der Formwerkzeuge für das im Vergleich mit der Schließkraft für die Formwerkzeughälften eine geringe Axialkraft erforderlich ist.

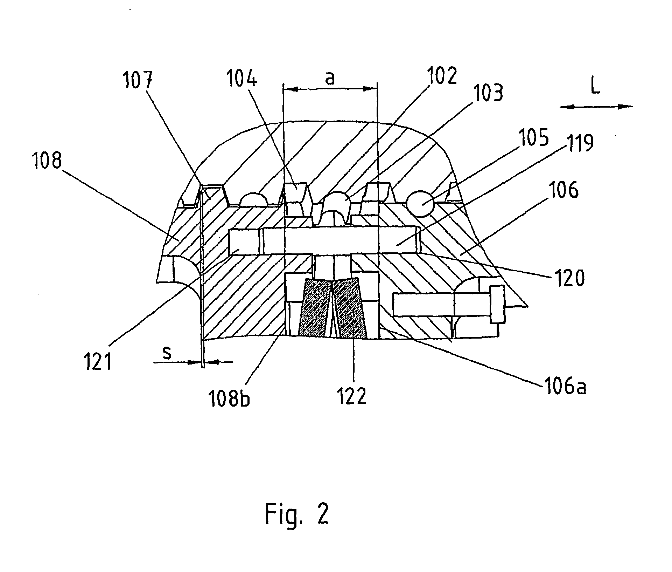

Der zweite Gewindegang 104 ist als Trapezgewinde ausgebildet, in dessen Gewinderille die Zähne 107 einer zweiten Spindelmutter 108 eingreifen. Durch die zweigängige Ausbildung der Spindel 2 haben beide Gewindegänge 103, 104 eine entsprechend große Steigung. Die Breite des umlaufenden Gewindezahns 107 der Spindelmutter 108 ist im Unterschied zu einem normalen Trapezgewinde mit einer geringeren Breite ausgebildet, so dass in Längsrichtung L der Spindel 102 gesehen jeweils ein Spiel S (siehe Figur 2) zwischen den Flanken der Gewinderille der Spindel 102 und dem Zahn 107 der zweiten Spindelmutter 108 vorhanden ist. Das Spiel S beträgt je Seite des Zahns 107 etwa 2/10 bis 10/10 mm, insbesondere 5/10 mm. Die zweite Spindelmutter 108 befindet sich somit beim Schnellhub der Spindel über die erste Spindelmutter 106 nicht im Kontakt mit der Gewinderille des zweiten Gewindeganges 104 der Spindel 102.

Die zweite Spindelmutter 108 ist an ihrer äußeren Umfangsfläche über ein Paar Wälzlager 110, vorzugsweise über einreihige Schrägkugellager, an der Innenseite eines hülsenförmigen Ansatzes 111 eines Gehäuses 112 gelagert. Dieses Gehäuse 112 ist zur Übertragung der Bewegungskräfte für den Schnellhub der Spindel 102 für das Öffnen und Schließen der Formwerkzeuge und das Aufbringen der Schließkraft über die Spindel 102 auf die nicht dargestellten Formwerkzeuge mit einem ebenfalls nicht dargestellten Maschinenrahmen der Kunststoffformmaschine verbunden. Die beiden Wälzlager 110 sind im Bereich ihrer Innen- und Außenringe 10i und 10a über konzentrisch zur Spindel 102 angeordnete Ringe 109 voneinander beanstandet und gegeneinander abgestützt.

Die Außenringe 110a der Wälzlager 110 sind über eine Hülse 123 in dem Ansatz 111 des Gehäuses 112 gelagert. Der Außenring 110a des rechten Wälzlagers 110 stützt sich an einem Absatz 123a der Hülse 123 ab. Der Außenring 110a des gegenüberliegenden linken Wälzlagers 110 ist über einen Sicherungsring 124 an der Hülse 123 abgestützt. Die Hülse 123 ist in Längsrichtung L der Spindel 102 in dem Ansatz 111 des Gehäuses 112 von einem Anschlag 125, der an dem dem Gehäuse 112 zugewandten Ende des Ansatzes 111 angeordnet ist, gegen ein weiteres Federelement 126 verschiebbar. Das als Tellerfeder ausgebildete Federelement 126 stützt sich einerseits an der dem Gehäuse 112 abgewandten Stirnseite der Hülse 123 ab und andererseits an einem weiteren Anschlag 127, der ringförmig ist und an das offene Ende des Ansatzes 111 angefügt ist.

Der Innenring 110i des rechten Wälzlagers 110 ist an einem Absatz 108c der zweiten Spindelmutter 108 abgestützt. Auf der gegenüberliegenden Seite ist der Innenring 110i des linken Wälzlagers 110 an einem Abstandsring 128 abgestützt, der an die Stirnfläche 108b der zweiten Spindelmutter 108 angrenzend auf der Spindel 102 angeordnet ist.

Das Gehäuse 112 besteht neben dem Ansatz 111 im wesentlichen aus einer Kolben-/Zylindereinheit 113 mit einem ringförmigen Kolben 114 und einem entsprechend ringförmig ausgebildeten Zylinderraum 115. Der ringförmige Kolben 114 ist mit seiner inneren Öffnung mit einem hülsenförmigen Druckstempel 116 verbunden, durch den die Spindel 102 geführt ist und dessen innere Umfangsfläche Spiel zu der äußeren Umfangsfläche der Spindel 102 aufweist. Die äußere- Umfangsfläche des hülsenförmigen Druckstempels 116 ist gegenüber der inneren Umfangsfläche der kreisförmigen Öffnung des Zylinders 115 abgedichtet und durch Druckaufschlagung des Zylinders 115 in Längsrichtung L der Spindel 102 und somit gegen die seitliche Stirnfläche 108a der zweiten Spindelmutter 108 verschiebbar.

Für den Schnellhub ist an der dem Druckstempel 116 gegenüberliegenden Stirnfläche 108b der zweiten Spindelmutter 108 eine konzentrisch zur zweiten Spindelmutter 108 ausgerichtete Zahnscheibe 117 angeordnet, die über einen Riemen 118 mit einem nicht dargestellten Elektromotor verbunden ist.

Insbesondere aus der Figur 2, die eine Ausschnittsvergrößerung von Figur 1. aus dem Bereich der aneinander grenzenden Spindelmuttern 106 und 108 zeigt, ist ersichtlich, dass zwischen der Zahnscheibe 117 bzw. der zweiten Spindelmutter 108 sowie der ersten Spindelmutter 106, die mit einem Abstand a von etwa 1 cm auf der Spindel 102 angeordnet sind, ein Mitnahmeelement 119 für eine drehsteife Übertragung des auf die Zahnscheibe 117 bzw. die zweite Spindelmutter 108 aufgebrachten Drehmomentes auf die erste Spindelmutter 106 angeordnet ist. Die Mitnahmeelemente 119 sind als Stifte ausgebildet, die in entsprechenden Bohrungen 120 in der, der zweiten Spindelmutter 108 zugewandten Stirnseite 106a, der ersten Spindelmutter 106 eingesteckt sind und mit ihrem freien Ende in weitere Bohrungen 121 in der Stirnfläche 108b der zweiten Spindelmutter 108 angeordnete Bohrungen eingefügt sind, wobei die Tiefe dieser Bohrungen 121 so gewählt ist, dass die erste Spindelmutter 106 sich in Längsrichtung L unter Verringerung des Abstandes a auf die zweite Spindelmutter 108 zu bewegen kann. Der Abstand a wird durch das Spiel S und die Baubreite des Federelements 122 bestimmt.

Zusätzlich sind im Bereich der Mitnahmeelemente 119 zwischen der ersten Spindelmutter 106 und der Zahnscheibe 117 bzw. der zweiten Spindelmutter 108 Federelemente 122 angeordnet, die vorzugsweise als Tellerfedern ausgebildet sind. Über die Federelemente 122 wird einerseits die erste Spindelmutter 106 beim Schnellhub an der zweiten Spindelmutter 108 und hierüber am Gehäuse 112 abgestützt und andererseits eine Entkoppelung der Verschiebebewegung der zweiten Spindelmutter 108 beim Aufbringen der Schließkraft von der ersten Spindelmutter 106 erreicht.

Nachfolgend wird die Funktionsweise der vorliegenden Erfindung an Hand der Beschreibung eines Schließvorganges von Formwerkzeugen einer Spritzgießmaschine näher erläutert. Ausgehend von geöffneten Formwerkzeughälften ist zunächst ein Schnellhub erforderlich, um die Formwerkzeuge zu schließen. Hierfür wird der nicht dargestellte Elektromotor in Betrieb gesetzt, der über den Riemen 118 die Zahnscheibe 117 antreibt. Die fest mit der zweiten Spindelmutter 108 verbundene Zahnscheibe 117 treibt somit einerseits die über Wälzlager 110 in dem Ansatz 111 des Gehäuses 112 gelagerte zweite Spindelmutter 108 und andererseits auch über die stiftförmigen Mitnahmeelemente 119 die erste Spindelmutter 106 an. Die somit links herum laufende erste Spindelmutter stützt sich in Längsrichtung L der Spindel 102 über die Federelemente 122 an der Stirnfläche 108b der Spindelmutter 108 ab. Diese Abstützkräfte werden zweiten Spindelmutter 108 über deren Wälzlager 110, über die Hülse 123, den Anschlag 125 des Gehäuses 112 das Gehäuse 112 und somit auf den Maschinenrahmen übertragen. Somit werden über die in Linksrichtung umlaufende erste Spindelmutter 106 - in Längsrichtung L der Spindel 102 gesehen - die für einen Schnellhub der Spindel 102 erforderlichen Kräfte über die Kugeln 105 auf den ersten Gewindegang 103 der Spindel 102 übertragen, wodurch die Spindel 102 in deren Längsrichtung L linear nach rechts bewegt wird. Dieser Antrieb mittels der ersten Spindelmutter 106 der Spindel 102 wird so lange fortgesetzt, bis die Formwerkzeughälften leicht zur Anlage kommen bzw. bis kurz vor diesem Zeitpunkt. Dann wird der Antrieb über den Riemen 118 gestoppt.

Die jetzt erforderliche Schließkraft zum Zusammenpressen der Formwerkzeughälften und ggf. zum endgültigen Schließen der beiden Formwerkzeughälften wird dann durch die Kolben-/Zylindereinheit 113 aufgebracht. Durch eine Beaufschlagung der rechten Zylinderkammer 115a mit Drucköl bewegen sich der Kolben 114 und der hiermit verbundene Druckstempel 116 nach rechts, und die rechte freie Stirnfläche des Druckstempels 116 kommt über den Abstandsring 128 in Kontakt mit der rechten Stimfläche 108a der zweiten Spindelmutter 108 und schiebt diese axialverschieblich in dem Ansatz 111 gelagerte zweite Spindelmutter 108 mit den Wälzlagern 110 und der Hülse 123 in Längsrichtung L der Spindel 102 nach rechts und somit innerhalb des hülsenförmigen Ansatzes 111 des Gehäuses 112.

Zunächst wird hierdurch das Spiel S zwischen den Flanken der Gewinderille des zweiten Gewindeganges 104 und den Gewindezähnen 107 der zweiten Spindelmutter 108 überwunden und anschließend zum Aufbau der Schließkraft zwischen den Formwerkzeughälften die Spindel 102 weiter in Längsrichtung L über den Kolben 114 gedrückt. Der Kraftfluss verläuft hierbei über den ringförmigen Kolben 114, über dessen zentralen hülsenförmigen Druckstempel 116, dessen an der rechten Stirnfläche 106a der zweiten Spindelmutter 106 über den Abstandsring 128 anliegenden Stirnfläche 116a, den Gewindezähnen 107 der zweiten Spindelmutter 108 auf die Gewinderille des zweiten Gewindeganges 104 der Spindel 102 und somit letztendlich auf die Spindel 102 in Richtung der Formwerkzeughälfte. Hierbei wird die Selbsthemmung zwischen der zweiten Spindelmutter 108 und dem zweiten Gewindegang 104 der Spindel 102 zur Aufrechterhaltung des Schließdrucks ausgenutzt.

Während zum Aufbau des Schließdruckes die zweite Spindelmutter 108 sich in Längsrichtung L der Spindel 102 relativ zu der ersten Spindelmutter 106 bewegt, erfolgt jedoch keine Belastung der ersten Spindelmutter 106 mit der Schließkraft, da die zwischen den Stirnflächen 106b und 108a der Spindelmutter 106 und 108 angeordneten Mitnahmeelemente in Längsrichtung L spielbehaftet sind. Der Gesamthub der Kolben-/ Zylindereinheit 113 wird durch das Spiel S und die Elastizität des Maschinenrahmens bestimmt und beträgt somit erfahrungsgemäß etwa 20 bis 30 mm.

Für den Abbau des Schließdruckes wird der Kolben 114 entlastet und die selbsthemmende Verbindung zwischen der zweiten Gewindespindel 108 und dem zweiten Gewindegang 104 der Spindel 102 durch Anlaufen des nicht dargestellten Elektromotors und der hiermit über den Riemen 118 verbundene Zahnscheibe 117 losgebrochen. Die in Längsrichtung L der Spindel 102 relativ zu der zweiten Spindelmutter 108 axial bewegbar erste Spindelmutter 106 stützt sich hierbei an einem an der Zahnscheibe 117 angeordneten ringförmigen Anschlag 129 ab.

Die Federelemente 122 sind so ausgelegt, dass diese etwa bei einer Kraft, die das 1,5-fache der für den Schnellhub erforderlichen Axialkraft für die Bewegung der Spindel 102 in Längsrichtung L beträgt, nachgeben.

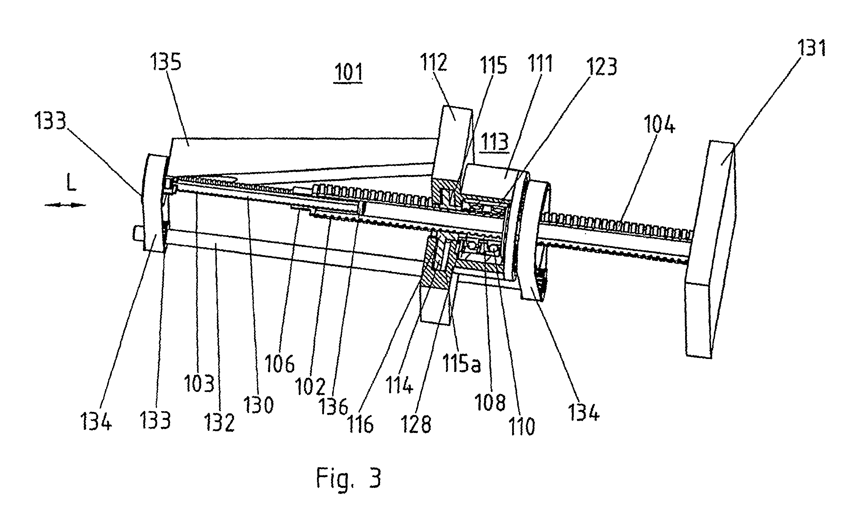

Die Figur 3 zeigt eine schematische Perspektivansicht einer Linearantriebseinrichtung 101 in einer vom Prinzip her bekannten Ausführungsform (vgl. JP-A-09029802). In Bezug auf die Kolben-/Zylindereinheit 113 und die zweite Spindelmutter 108 stimmt diese Ausführungsform mit der zuvor beschriebenen überein, so dass auf deren Beschreibung Bezug genommen wird. Gleiche Teile sind mit gleichen Bezugsziffern versehen. Bei dieser Ausführungsform ist die Spindel 102 vorteilhafterweise als Hohlwelle ausgebildet, um die übertragbaren Knickkräfte zu steigern. Hierbei wird der erste Gewindegang 103 auf einer zweiten, in die Hohlspindel eingeführten Spindel 130 angeordnet, da aufgrund der geringen Kräfte für den Schnellhub auch ein geringer Spindeldurchmesser ausreichend ist. Die erste Spindel 102 ist somit nur mit dem zweiten Gewindegang 104 versehen. Bei dieser Lösung ist die erste Spindelmutter 106 feststehend an dem der Formaufspannplatte 131 abgewandten Ende der Hohlspindel 102 angeordnet. Für die Drehmomentverbindung zwischen der angetriebenen zweiten Spindelmutter 108 und der zweiten Spindel ist dann eine parallel zu den Spindeln 102, 130 verlaufende Welle 132 vorgesehen. Die Welle 132 ist im Bereich ihrer Enden über Riementriebe aus Scheiben 133 und Riemen 134 einerseits mit der Zahnscheibe 117 an der zweiten Spindelmutter 108 und andererseits mit dem von der Spindel 102 abgewandten Ende der weiteren Spindel 130 verbunden. Die weitere Spindel 130 ist an dem, dem Gehäuse 112 abgewandtem Ende, über einen Träger 135 gelagert, der mit dem Gehäuse 112 verbunden ist. Zusätzlich ist an dem anderen Ende der Spindel 130 ein Lager 136 angeordnet, über das die weitere Spindel 130 zusätzlich in der Hohlspindel 102 abgestützt wird.

Bei dieser Ausführungsform können die Steigungen der Spindeln 102, 130 unterschiedlich gewählt werden, da dies über die Übersetzung der Riementriebe ausgeglichen werden kann.

Die vorliegende Erfindung ist zwar anhand einer sogenannten Dreiplattenmaschine beschrieben, jedoch kann die Linearantriebseinrichtung auch für sogenannte Zweiplattenmaschinen eingesetzt werden, bei der dann diese nicht als Druckstempel sondern als Zugelement betrieben wird. In diesem Einsatzfall sind normalerweise vier Spindeln in den Eckpunkten eines gedachten Vierecks zwischen der feststehenden Formaufspannplatte und einer beweglichen Formaufspannplatte vorgesehen. Hierbei ist es möglich, die angetriebenen Spindelmuttern und die Kolben-/Zylindereinheit an der feststehenden oder beweglichen Formaufspannplatte anzuordnen. Es ist auch möglich, die Doppelspindeleinheit von der Kolben-/Zylindereinheit örtlich zu trennen, d. h. beispielsweise die Kolben-/Zylindereinheit an einer feststehenden Platte und die Doppelspindeleinheit an einer beweglichen Platte anzuordnen. Die Schließkraft wird dann über die Spindel der zweiten Spindelmutter zugeführt.

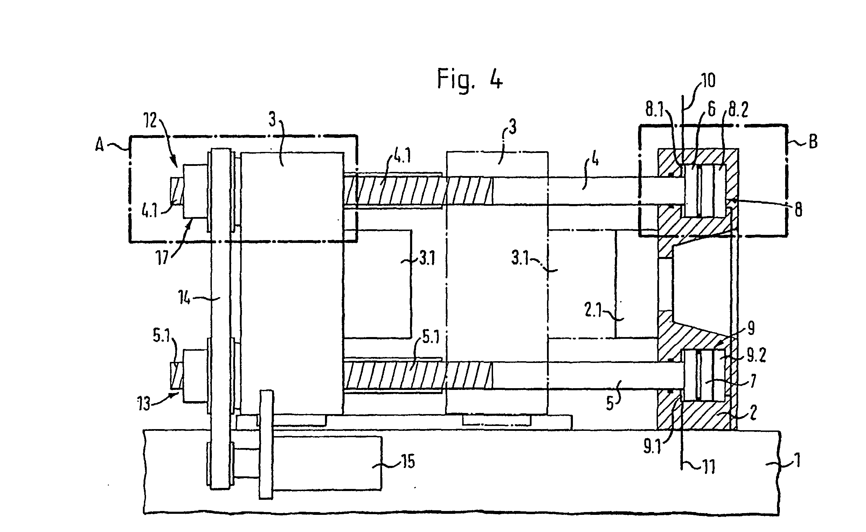

Eine Ausführungsform einer Linearantriebsvorrichtung bei einer Zweiplattenschließeinheit wird im Folgenden anhand der Figuren 4 - 9 erläutert.

Die Schließeinheit einer Spritzgießmaschine gemäß Fig. 4 umfasst eine fest mit dem Maschinengestell 1 verbundene feste Formaufspannplatte 2 und eine auf dem Maschinengestell 1 verschieblich abgestützte bewegliche Formaufspannplatte 3. Die Formaufspannplatten 2 und 3 sind über vier Holme 4 und 5 miteinander verbunden, wobei in der Darstellung nach Fig. 4 nur die beiden vorderen Holme sichtbar sind. Die in der festen Formaufspannplatte 2 angeordneten Enden der Holme 4, 5 weisen Kolben 6, 7 auf, die drehfest in Zylinderräumen 8, 9 innerhalb der festen Formaufspannplatte 2 gelagert sind. Die in der festen Formaufspannplatte 2 angeordneten, hydraulischen Kolben-/Zylindereinheiten stellen die Schließkrafteinheit zur Erzeugung der Schließkraft SK dar. Die Kolben 6, 7 unterteilen die Zylinderräume 8, 9 in schließseitige Zylinderräume 8.1, 9.1 und öffnungsseitige Zylinderräume 8.2, 9.2. wobei durch Beaufschlagung der schließseitigen Zylinderräume 8.1 und 9.1 mit hydraulischem Druckmedium über Hydraulikleitungen 10, 11 einer nicht näher dargestellten Hydraulikanlage in den Holmen 4, 5 die Schließkraft SK erzeugbar ist.

Die Formaufspannplatten 2, 3 tragen Formhälften 2.1 und 3.1.Die bewegliche Formaufspannplatte 3 ist in Volllinien in Öffnungsstellung dargestellt und in strichpunktierten Linien in Schließstellung, in der sich die Formhälften 2.1, 3.1 in Berührungskontakt befinden.

An den der festen Formaufspannplatte 2 abgewandten Enden der Holme 4, 5 sind diese als Spindeln 4.1, 5.1 ausgebildet und sind durch die bewegliche Formaufspannplatte 3 geführt, wobei an den über die bewegliche Formaufspannplatte 3 hinausragenden Enden Spindelantriebe 12, 13 montiert sind, die über einen Zahnriemen 14 von einem an der beweglichen Formaufspannplatte 3 befestigten Elektromotor 15 in Drehung versetzt werden können.

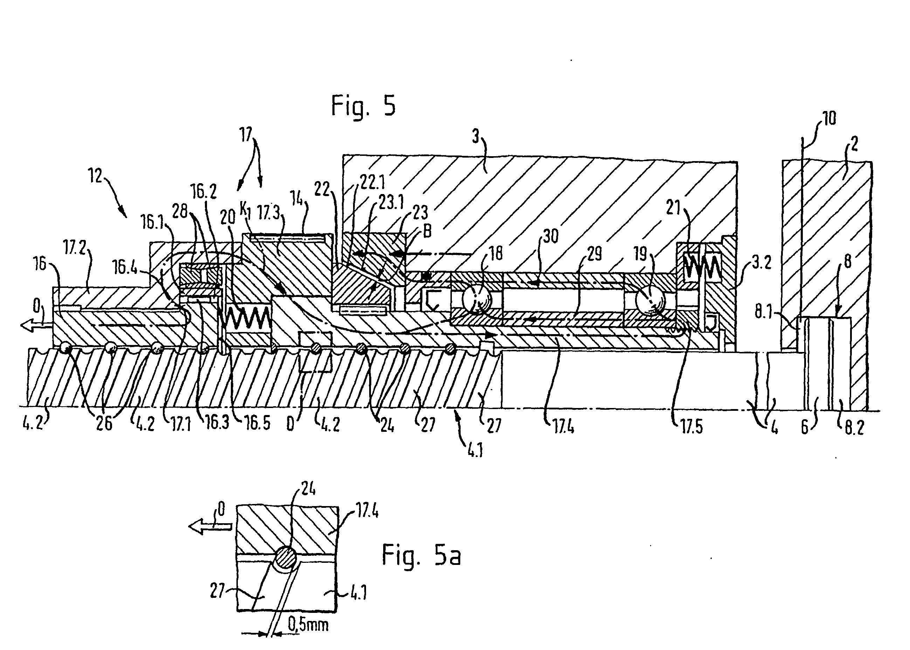

Die Fig. 5 zeigt im Halbschnitt die Spindel 4.1 mit dem Spindelantrieb 12, den Zahnriemen 14, die bewegliche Formaufspannplatte 3, die feste Formaufspannplatte 2, den Holm 4, den Kolben 6 sowie den schließseitigen Zylinderraum 8.1, den öffnungsseitigen Zylinderraum 8.2 und die Hydraulikleitung 10.

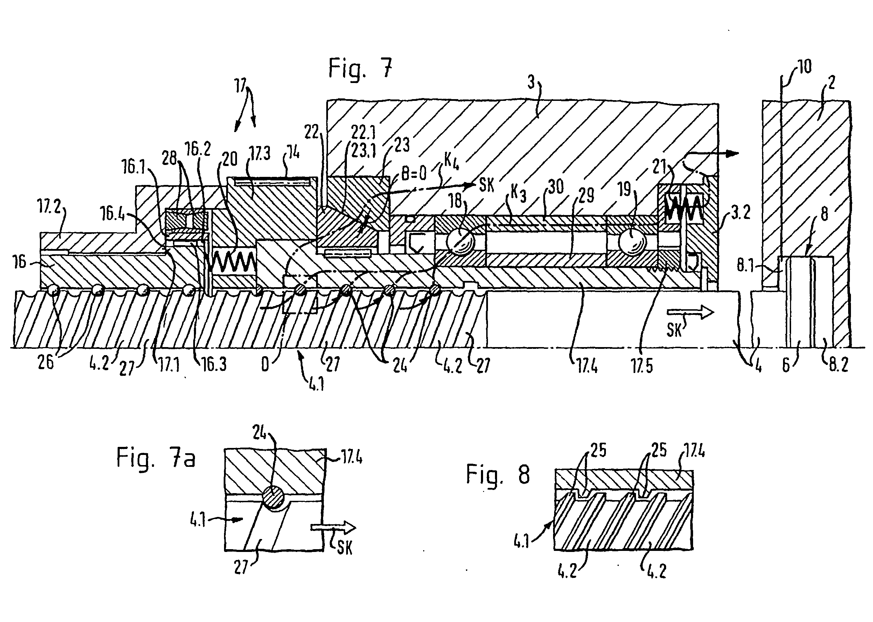

Der Spindelantrieb 12 umfasst im wesentlichen eine auf der Spindel 4.1 montierte erste Spindelmutter 16 (im Folgenden nur als "Spindelmutter" bezeichnet), eine mit dem Zahnriemen 14 in Eingriff stehende zweite Spindelmutter 17 (im Folgenden als "Drehhülse 17" bezeichnet), eine Lagerung der Drehhülse 17 in der beweglichen Formaufspannplatte 3 mittels der Lager 18 und 19, eine erste, zwischen Spindelmutter 16 und Drehhülse 17 wirksame Federeinrichtung 20, eine zweite, zwischen der äußeren Lagerabstützung der Lager 18, 19 und der beweglichen Formaufspannplatte 3 wirksame Federeinrichtung 21, jeweils ein an der beweglichen Formaufspannplatte 3 und der Drehhülse 17 befestigtes Kraftschlusselement in Form von Bremsringen 22 und 23, die mit kegeligen Reibschlussflächen 22.1 und 23.1 versehen sind, und zwischen Drehhülse 17 und Spindel 4.1 in Kraftschluss schaltbare Eingriffsmittel in Form einer Wendel 24 oder in Form von Gangprofilen 25 (Trapezgewinde Fig. 8).

Die Spindelmutter 16 und die Spindel 4.1 weisen Gewinderillen auf, in denen Kugeln 26 abwälzen. Die Gewinderillen 4.2 der Spindel 4.1 können ein- oder mehrgängig sein und weisen dazwischenliegende Rillen 27 für die Eingriffsmittel der Drehhülse 17 auf. Die Kugeln 26 wälzen in den Gewinderillen von Spindelmutter 16 und Spindel 4.1 im wesentlichen spielfrei ab, so dass eine Verdrehung der Spindelmutter 16 gegenüber der drehfesten Spindel 4.1 stets exakt mit einer axialen Stellbewegung der Spindelmutter 16 einhergeht.

Die Drehhülse 17 ist mit der Spindelmutter 16 drehfest gekoppelt und ist während der vom Spindelantrieb 12 bewerkstelligten Öffnungs- und Schließbewegung auch axial gegenüber der Spindelmutter 16 spielfrei in fester Position gehalten. Dies wird dadurch bewirkt, dass die Drehhülse 17 auf der linken Seite mit einem festen Anschlag und auf der rechten Seite uber die erste redereinrichtung 20 an der Spindermutter 16 abgestützt ist. Die erste Federeinrichtung 20 bleibt bei Durchführung der Öffnungs- und Schließbewegung inkompressibel.

Die Drehhülse 17 ist gegenüber der Spindelmutter 16 axial so justiert, dass die in der Drehhülse 17 gehaltene Wendel 24 in der Rille 27 der Spindel 4.1 vollkommen berührungsfrei, beispielsweise mit jeweils einem Spiel von 0,5 mm zu beiden Flanken der Rille 27, gehalten ist. (siehe Fig. 5a).Die Berührungsfreiheit stellt sicher, dass die axialen Stellbewegungen der Spindelmutter 16 über die Drehhülse 17 ohne nennenswerte Drehwiderstände auf die bewegliche Formaufspannplatte 3 übertragen werden können.

Die axiale Justierung der Drehhülse 17 gegenüber der Spindelmutter 16 wird durch folgende Einrichtungen und Maßnahmen erreicht:

Die Drehhülse 17 wird gegenüber der Spindelmutter 16 zunächst so verdreht, dass die in der Drehhülse 17 gehaltene Wendel 24 auf der rechten Flanke der Rille 27 der Spindel 4.1 zur Anlage kommt. Anschließend wird die Drehhülse 17 gegenüber der Spindelmutter 16 wieder soweit zurückgedreht, dass die Wendel 24 zur Rille 27 der Spindel 4.1 wieder spielfrei, beispielsweise mit einem Spiel von jeweils 0,5 mm zu beiden Flanken der Rille 27 positioniert ist. Diese relative Drehposition zwischen Spindelmutter 16 und Drehhülse 17 wird durch ein zwischen Drehhülse 17 und Spindelmutter 16 aufspreizbares Konusspannelement 28 fixiert. Das Konusspannelement 28 kommt dabei im festen Reibschluss auf einem Spindelmutterring 16.1 zur Anlage in dem die Spindelmutter 16 mittels Nut 16.2 und Passfeder 16.3 drehfest aber axial verschieblich gelagert ist.

Wie vorbeschrieben, bleibt die Drehhülse 17 während der vom Spindelantrieb 12 durchgeführten Öffnungs- und Schließbewegung stets in gleicher axialer Position gegenüber der Spindelmutter 16, dies zum einen durch Anlage des Anschlags 17.1 der Drehhülse 17 an der linken Anschlagfläche 16.4 der Spindelmutter und zum anderen durch Anlage der ersten Federeinrichtung 20 an der rechten Anschlagfläche 16.5 der Spindelmutter 16. Die Kraft der ersten Federeinrichtung 20 ist so eingestellt, dass diese bei den Massenkräften, die beim Verschieben der beweglichen Formaufspannplatte 3 in Schließrichtung entstehen, nicht zusammengedrückt wird.

Die Drehhülse 17 setzt sich zusammen aus den Hülsenelementen 17.2 und 17.3, die das Konusspannelement 28 sowie die linke und die rechte Anschlagfläche 16.4, 16.5 der Spindelmutter 16 umschließen. Das Hülsenelement 17.3 steht mit dem Zahnriemen 14 in Eingriff. Die Drehhülse 17 besteht ferner aus dem Bremsring 22.1, der Lagerhülse 17.4, und der Mutter 17.5. Sämtliche Teile der Drehhülse 17 sind drehfest miteinander verbunden.

Auf der Lagerhülse 17.4 sind die Lager 18 und 19 unter Zwischenlage eines inneren Distanzrings 29 befestigt.

Die Lager 18 und 19 sind mit ihren äußeren Lagerringen unter Zwischenlage eines äußeren Distanzrings 30 axial verschieblich in der beweglichen Formaufspannptatte 3 abgestützt.

Die äußeren Lagerringe der Lager 18 und 19 sowie der äußere Distanzring 30 stellen die äußere Lagerabstützung dar, mit der die Drehhülse 17 axial entweder an der zweiten Federeinrichtung 21 oder am zweiten, mit der beweglichen Formaufspannplatte 3 verbundenen Bremsring 23 anschlagen kann. Die zweite Federeinrichtung 21 ist in einem fest mit der beweglichen Formaufspannplatte 3 verbundenen Flanschring 3.2 abgestützt.

Die erfindungsgemäße Schließeinheit wird wie folgt betrieben:

### 1. Öffnen der Schließeinheit mit dem Spindelantrieb

Durch Einleitung einer Drehbewegung über den Elektromotor 15 und den Zahnriemen 14 in die Spindelantriebe 12, 13 wird die bewegliche Formaufspannplatte 3 mit der Formhälfte 3.1 von der in Fig. 1 in strichpunktierten Linien dargestellten geschlossenen Position in die in Volllinien dargestellte Öffnungsstellung verschoben.

Gemäß Fig. 5 führt die über den Zahnriemen 14 und die Drehhülse 17 in die Spindelmutter 16 eingeleitete Drehbewegung zu einer axialen Verstellung der Spindelmutter 16 nach links bzw. in Öffnungsrichtung "0", Über die linke Anschlagfläche 16.4 wird die Drehhülse 17 ebenfalls nach links verschoben worauf sich der in Fig. 2 in strichpunktierten Linien dargestellte Kraftfluss K₁ ergibt. Dieser führt von der linken Anschlagfläche 16.4 über die Drehhülse 17 in die Lager 18 und 19 und von diesen über einen Dichtungsring in den fest mit der beweglichen Formaufspannplatte 3 verbundenen Bremsring 23.1. Mit Einleiten der Öffnungsbewegung entspannt sich die zweite Federeinrichtung 21 und führt zu einer Auseinanderbewegung der kegeligen Reibschlussflächen 22.1 und 22.2, um die Spaltweite B womit der in der vorangegangenen Schließdruckstellung gegebene Reibschluss aufgehoben wird und die bewegliche Formaufspannplatte 3 bei frei drehender Drehhülse 17 von dieser nach links in Öffnungsrichtung mitgenommen wird. Die freie Drehbarkeit der Drehhülse 17 ergibt sich dabei durch die vorbeschriebene axiale Positionierung der Drehhülse 17 gegenüber der Spindelmutter 16, bei der sich die Eingriffsmittel, hier die Wendel 24, gemäß Fig. 5a vollkommen außer Eingriff befinden. Wie bei der nachfolgend beschriebenen Schließbewegung befinden sich die erste und die zweite Federeinrichtung 20, 21 im nicht zusammengedrückten Zustand, so dass sich einerseits die freie Drehbarkeit der Drehhülse 17 gegenüber der Spindel 4.1 und andererseits die Entkopplung der kegeligen Reibschlussflächen 22.1 und 23.1 ergibt.

### 2. Schließen der Schließeinheit mit dem Spindelantrieb

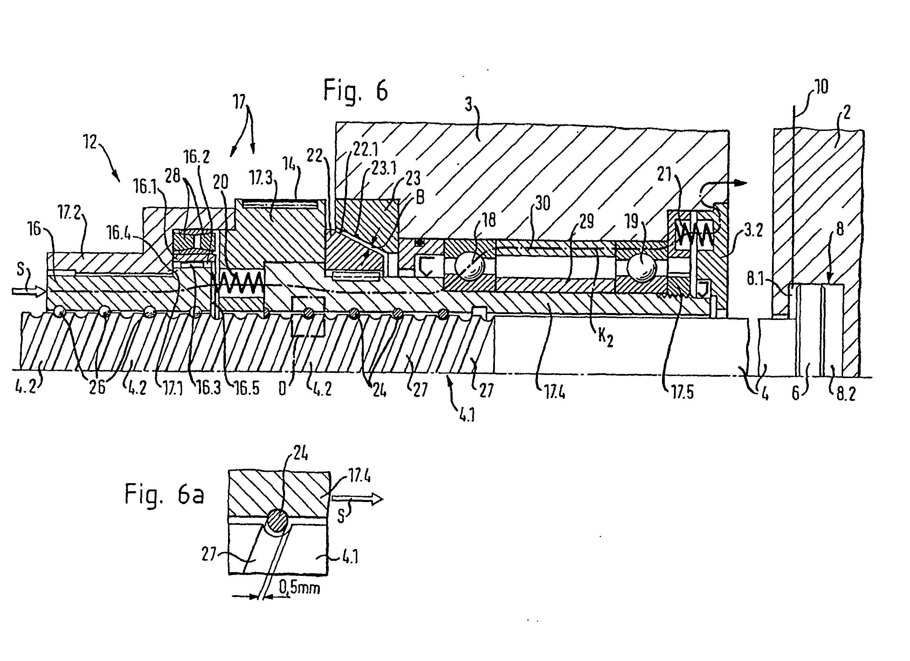

Durch zum Öffnungsvorgang gegenläufigen Drehantrieb der Spindelmutter 16 über den Zahnriemen 14 und die Drehhülse 17 wird die Drehhülse 17 nach rechts bzw. in Schließrichtung "S" verschoben, wobei sich gemäß Fig. 6 der in strichpunktierten Linien dargestellte Kraftfluss K₂ ergibt. Dieser führt von der Spindelmutter 16 über die rechte Anschlagfläche 16.5 und die erste, starr bleibende Federeinrichtung 20 auf die Drehhülse 17 und von dieser über das erste und das zweite Lager 18, 19 auf die äußere Lagerabstützung. Von dieser wird die zweite, ebenfalls starr bleibende Federeinrichtung 20 nach rechts bzw. in Schließrichtung verschoben, die über den Flanschring 3.2 die bewegliche Formaufspannplatte 3 verschiebt, bis die in Fig. 4 in strichpunktierten Linien dargestellte Schließposition erreicht ist, bei der die beiden Formhälften 2.1 und 3.1 ohne Schließdruck gegeneinander anliegen. Auch in dieser Betriebsphase ist aufgrund der axialen Positionierung zwischen Spindelmutter 16 und Drehhülse 17 die freie Drehbarkeit zwischen Drehhülse 17 und Spindel 4.1 gemäß Fig. 6a gegeben.

### 3. Schließdruckerzeugung mit der Schließdruckeinheit

Durch Druckbeaufschlagung des schließseitigen Zylinderraumes 8.1 mit hydraulischen Druckmedium wird der mit dem Holm 4 bzw. der Spindel 4.1 verbundene Kolben 6 nach rechts verschoben, worauf die in Schließstellung befindlichen Formhälften 2.1 und 3.1 mit Schließdruck SK gegeneinander gepresst werden.

Gemäß Fig. 7 führt die über den Kolben 6 in die Spindel 4.1 eingeleitete Schließkraft SK zunächst dazu, dass sich die Spindelmutter 16 unter Kompression der ersten Federeinheit 20 um einen geringfügigen Betrag nach rechts verschiebt, so dass die Eingriffsmittel, hier die in der Drehhülse 17 angeordnete Wendel 24, wie in Fig. 7a dargestellt, voll auf der linken Flanke der Rille 27 zur Auflage kommt. Die Verschiebung entspricht dabei im wesentlichen einer Spaltbreite, wie sie in den Fig. 5a und 6a zwischen der Wendel 24 und den beiden Flanken der Rille 27 gezeigt ist.

Gemäß der zunächst sich einstellenden leichten axialen Verschiebung der Spindelmutter 16 gegenüber der Drehhülse 17 ergibt sich ein erster in strichpunktierten Linien gekennzeichneter Kraftfluss K₃. Aufgrund der Tatsache, dass sich die Spindel 4.1 über die Wendel 24 mit der Drehhülse 17 gemäß Fig. 7a in direktem Kontakt befindet, wird die Schließkraft von der Spindel 4.1 direkt in die Drehhülse 17 eingeleitetet und über die Lager 18 und 19 auf die äußere Lagerabstützung auf die zweite Federeinrichtung 21 übertragen. Da die zweite Federeinrichtung 21 eine größere Federkraft aufweist als die erste Federeinrichtung 20, erfolgt die Kompression der zweiten Federeinrichtung 21 zeitlich etwas versetzt zur Kompression der ersten Federeinrichtung 20, d.h., durch die Kompression der ersten Federeinrichtung 20 wird zunächst gemäß Fig. 7a ein unmittelbarer axialer Kraftschluss zwischen Spindel 4.1 und Drehhülse 17 hergestellt und ein erster Kraftfluss K₃ erzeugt, der nachfolgend zur Kompression der zweiten Federeinrichtung 21 führt. Mit der Kompression der zweiten Federeinrichtung 21 geht eine leichte Verschiebung der Drehhülse 17 gegenüber der beweglichen Formaufspannplatte 3 bzw. des Bremsringes 23 einher, so dass dessen kegelige Reibschlussfläche 23.1 in drehfesten Kontakt mit der kegeligen Reibschlussfläche 23.1 des Bremsrings 22 gelangt. Da damit nun ein drehfester und unmittelbarer Kraftschluss zwischen Spindel 4.1, Wendel 24 (Fig. 7a), Drehhülse 17, Bremsring 22, Bremsring 23 und beweglicher Formaufspannplatte 3 besteht, verläuft der zweite maßgebliche Kraftfluss K₄ (strichpunktierte Linie mit 2 Punkten) über die vorbeschriebene Kraftschlussfolge.

Hier ist wichtig, dass der Kraftfluss für die beträchtlichen statischen Schließkräfte nicht über den Spindelantrieb 12 und dessen sehr geringe Kugelaufstandsflächen erfolgt, sondern bei selbsttätig wirkender Rückdrehsicherung (Reibschluss durch die kegeligen Reibschlussflächen 22.1 und 23.1) für den Spindelantrieb 12 bei direktem Kraftfluss vom hydraulischen Kolben 6, der Spindel 4.1, der Wendel 24, der Drehhülse 17, dem Bremsring 22, dem Bremsring 23 auf die bewegliche Formaufspannplatte 3. Im Gegensatz zu der äußerst geringen Kugelaufstandsfläche eines Kugelspindelantriebs wird nach der Erfindung die Schließkraft über die bei der Wendel 24 gegebene lange linienmäßige Aufstandsfläche erzielt.

Werden als Eingriffsmittel nicht Wendeln 24 verwendet sondern ineinander greifende Gangprofile 25 von Spindel 16 und Drehhülse 17, kann die linienmäßige Aufstandsfläche noch erheblich erweitert werden. Fig. 8 zeigt hierzu ein Gangprofil 25 in Form eines Trapezgewindes, mit dem sich eine langgestreckte, breite, wendelförmig verlaufende Aufstandsfläche erzielen lässt, die höchsten Belastungen standhalten kann.

## Patentansprüche

1. Linearantriebseinrichtung zum Öffnen und Schließen von Formwerkzeugen sowie Aufbringen einer Schließkraft hierauf, insbesondere von Formwerkzeughälften einer Kunststoffformmaschine, mit einem auf die Formwerkzeuge wirkenden Spindeltrieb mit einer ersten Spindelmutter für ein Öffnen und Schließen der Formwerkzeuge, mit einer Spindel und mit einer auf die Formwerkzeuge wirkenden Kolben-/Zylindereinheit für das Aufbringen der Schließkraft, **dadurch gekennzeichnet, dass** die Kolben-/Zylindereinheit (113; 6, 8; 7, 9) über eine mit der Spindel unmittelbar zusammenwirkenden zweiten Spindelmutter (108; 17) auf die Formwerkzeuge wirkt.

2. Linearantriebseinrichtung nach Anspruch 1, **dadurch gekennzeichnet, dass** die zweite Spindelmutter (108; 17) während des Öffnen und Schließen der Formwerkzeuge über die erste Spindelmutter (106; 16) kraftarm, vorzugsweise freilaufend, entlang der Spindel (102; 4, 5) bewegt wird.

3. Linearantriebseinrichtung nach Anspruch 1 oder 2, **dadurch gekennzeichnet, dass** die Spindel (102) nach Art eines Stempels feststehend mit dem Formwerkzeug verbunden ist.

4. Linearantriebseinrichtung nach einem der Ansprüche 1 bis 3, **dadurch gekennzeichnet, dass** die Spindel (102) einen Gewindegang (104) für die zweite Spindelmutter (108) aufweist, dessen Gewinderille weiter ist als die Breite von Gewindezähnen (107) der zweiten Spindelmutter (108).

5. Linearantriebseinrichtung nach einem der Ansprüche 1 bis 4, **dadurch gekennzeichnet, dass** die Spindel (102) zweigängig ausgebildet ist und neben einem Gewindegang (104) für die zweite Spindelmutter (108) einen weiteren Gewindegang (103) für die erste Spindelmutter (106) aufweist.

6. Linearantriebseinrichtung nach Anspruch 5, **dadurch gekennzeichnet, dass** die erste Spindelmutter (106) auf der Spindel (102) mit einem Abstand (a) neben der zweiten Spindelmutter (108) angeordnet ist und zur Drehmomentübertragung zwischen der ersten Spindelmutter (106) und der zweiten Spindelmutter (108) diese über Mitnahmeelemente (119) miteinander verbunden sind, wobei die zweite Spindelmutter (108) relativ zu der ersten Spindelmutter (106) auf der Spindel (102) in deren Längsrichtung (L) gesehen verschiebbar ist.

7. Linearantriebseinrichtung nach Anspruch 6, **dadurch gekennzeichnet, dass** die Mitnahmeelemente (119) als Stifte ausgebildet sind, von denen jeder mit seinen Enden in Bohrungen (120, 121) in den einander zugewandten Stirnflächen (106a, 108a) der ersten Spindelmutter (106) und der zweiten Spindelmutter (108) eingesteckt ist, wobei die Tiefe der Bohrungen (120, 121) und die Länge der Stifte so gewählt ist, dass die zweiten Spindelmutter (108) relativ zu der ersten Spindelmutter (106) auf der Spindel (102) in deren Längsrichtung (L) gesehen verschiebbar ist.

8. Linearantriebseinrichtung nach Anspruch 6 oder 7, **dadurch gekennzeichnet, dass** die erste Spindelmutter (106) sich über Federelemente (122) an der zweiten Spindelmutter (108) abstützt.

9. Linearantriebseinrichtung nach Anspruch 8, **dadurch gekennzeichnet, dass** die als Tellerfedern ausgebildeten Federelemente (122) zwischen der ersten Spindelmutter (106) und der zweiten Spindelmutter (108) angeordnet sind.

10. Linearantriebseinrichtung nach einem der Ansprüche 1 bis 9, **dadurch gekennzeichnet, dass** die erste Spindelmutter (106) und der zugehörige Gewindegang (103) als Kugelgewindetrieb und die zweite Spindelmutter (108) und der zugehörige Gewindegang (104) als Flachgewindetrieb, vorzugsweise als Trapezgewindetrieb, ausgebildet sind.

11. Linearantriebseinrichtung nach einem der Ansprüche 1 bis 10, **dadurch gekennzeichnet, dass** die Kolben-/Zylindereinheit (113) im wesentlichen aus einem Kolben (114) und einem Zylinderraum (115) in einem Gehäuse (112) besteht und der ringförmige Kolben (114) einen hülsenförmigen Druckstempel (116) aufweist, durch den die Spindel (102) geführt ist.

12. Linearantriebseinrichtung nach Anspruch 11, **dadurch gekennzeichnet, dass** angrenzend zu dem hülsenförmigen Druckstempel (116) in einem an dem Gehäuse (112) angeordneten hülsenförmigen Ansatz (111) über Wälzlager (110) die zweite Spindelmutter (108) gelagert ist, wobei die zweite Spindelmutter (108) zur Übertragung der Schließkraft von dem Druckstempel (116) auf die Spindel (102) in Längsrichtung (L) der Spindel (102) verschiebbar ist.

13. Linearantriebseinrichtung nach einem der Ansprüche 1 bis 12, **dadurch gekennzeichnet, dass** an einer Stirnfläche (108a) der zweiten Spindelmutter (108) eine Zahnscheibe (117) für einen Antrieb für der zweiten Spindelmutter (108) über einen Riemen (118) für ein Öffnen und Schließen der Formwerkzeuge angeordnet ist.

14. Linearantriebseinrichtung nach einem der Ansprüche 1 bis 13, **dadurch gekennzeichnet, dass** die Kolben-/Zylindereinheit (113) hydraulisch betreibbar ist.

15. Linearantriebseinrichtung nach Ansprüchen 1, 2, 4, 5, 8, 13, oder 14 mit mindestens einer beweglichen und einer festen Formaufspannplatte (2, 3) als Formwerkzeuge, mit mehreren, vorzugsweise vier Spindeltrieben (12, 13), wobei jeder Spindeltrieb einen Holm (4,5) aufweist, der an seinem, die bewegliche Formaufspannplatte (3) durchsetzenden Ende, als Spindel (4.1) ausgebildet ist, und wobei bei jedem Spindeltrieb
• der Holm (4, 5) drehfest in der festen Formaufspannplatte (2) gelagert ist,
• die erste Spindelmutter (16) drehfest mit der zweiten Spindelmutter (17) gekoppelt ist,
• die zweite Spindelmutter (17) Eingriffsmittel aufweist, mit denen die zweite Spindelmutter (17) bei Schließdruckaufbau unmittelbar und in langer Linienberührung mit der Spindel (4.1) verbindbar ist,
• die zweite Spindelmutter (17) mit dem Drehantrieb (14, 15) gekoppelt ist,
• die zweite Spindelmutter (17) in der beweglichen Formaufspannplatte (3) in Lagern (18, 19) axial verschieblich gelagert ist,
• die zweite Spindelmutter (17) mit einem Kraftschlusselement fest verbunden ist, das durch axiale Verschiebung gegenüber der beweglichen Formaufspannplatte (3) mit einem komplementären Kraftschlusselement der beweglichen Formaufspannplatte (3) drehfest koppelbar ist,
• die erste Spindelmutter (16) an der zweiten Spindelmutter (17) an der, der beweglichen Formaufspannplatte (3) abgewandten Seite, über einen festen Anschlag (16.4) und an der, der beweglichen Formaufspannplatte (3) zugewandten Seite über eine erste Federeinrichtung (20) axial abgestützt ist,
• zwischen der drehfest in der beweglichen Formaufspannplatte (3) angeordneten äußeren Lagerstützung der Lager (18, 19) und der beweglichen Formaufspannplatte (3) eine zweite Federeinrichtung (21) angeordnet ist, deren Federkraft größer als die Federkraft der ersten Federeinrichtung (20) ist,
• die Federkraft der ersten Federeinrichtung (20) nach der Maßgabe bestimmt ist, dass bei einer über den Spindeltrieb (12, 13) bewerkstelligten Öffnungs- und Schließbewegung der beweglichen Formaufspannplatte (3) die erste und die zweite Federeinrichtung (20, 21) unverformt bleiben, wobei die zweite Spindelmutter (17) gegenüber der ersten Spindelmutter (16) durch Anlage am festen Anschlag (16.4) einerseits und Anlage an der unverformten ersten Federeinrichtung (20) andererseits derart positioniert ist, dass sich die Eingriffsmittel der zweiten Spindelmutter (17) gegenüber der Spindel (4.1) außer Eingriff befinden und
• die Federkraft der zweiten Federeinrichtung (21) nach der Maßgabe bestimmt ist, dass bei Wirksamwerden einer über die Spindel (4.1) eingeleiteten Schließkraft - SK zunächst die erste Federeinheit (20) zusammengedrückt wird, worauf sich die zweite Spindelmutter (17) gegenüber der ersten Spindelmutter (16) derart verschiebt, dass die Eingriffsmittel der zweiten Spindelmutter (17) voll in Kraftschluss mit der Spindel (4.1) gelangen und anschließend die zweite Federeinrichtung (21) zusammengedrückt wird, worauf eine axiale Verschiebung der zweiten Spindelmutter (17) gegenüber der beweglichen Formaufspannplatte (3) erfolgt, die mit einer drehfesten Kopplung der Kraftschlusselemente einhergeht.

16. Linearantriebseinrichtung nach Anspruch 15, **dadurch gekennzeichnet, dass** die Eingriffsmittel der zweiten Spindelmutter (17) aus einer Wendel (24) bestehen, die in Wendelrillen der zweiten Spindelmutter (17) angeordnet ist und die durch axiale Einstellung der zweiten Spindelmutter (17) gegenüber der ersten Spindelmutter (16) mit den Gewinderillen (27) der Spindel (4.1) entweder in vollen Kraftschluss oder berührungsfrei schaltbar ist.

17. Linearantriebseinrichtung nach Anspruch 15, **dadurch gekennzeichnet, dass** die Eingriffsmittel der zweiten Spindelmutter aus ineinandergreifenden Gangprofilen (25) der zweiten Spindelmutter (17) einerseits und der Spindel (4.1) andererseits bestehen.

18. Linearantriebseinrichtung nach Anspruch 17, **dadurch gekennzeichnet, dass** die Gangprofile (25) von zweiter Spindelmutter (17) und Spindel (4.1) nach Art eines Trapezgewindes ineinander greifen.

19. Linearantriebseinrichtung nach Anspruch 17, **dadurch gekennzeichnet, dass** die Gangprofile (25) von zweiter Spindelmutter (17) und Spindel (4.1) nach Art eines Sägezahngewindes ineinander greifen.

20. Linearantriebseinrichtung nach einem der Ansprüche 15 bis 19, **dadurch gekennzeichnet, dass** der Spindeltrieb (12, 13) ein Kugelspindeltrieb ist.

21. Linearantriebseinrichtung nach Anspruch 15, **dadurch gekennzeichnet, dass** die erste Spindelmutter (16) und die Eingriffsmittel der zweiten Spindelmutter (17) mit den gleichen Gewinderillen der Spindel (4.1) in Eingriff stehen.

22. Linearantriebseinrichtung nach einem der Ansprüche 15 bis 21, **dadurch gekennzeichnet, dass** die Einrichtung zur drehfesten axialen Positionierung bzw. Justierung der zweiten Spindelmutter (17) gegenüber der ersten Spindelmutter (16) aus einem Konusspannelement (28) besteht, mit dem ein Spindelmutterring (16.1) drehfest mit der zweiten Spindelmutter (17) verbindbar ist und in dem die erste Spindelmutter (16) mittels Nut (16.2) und Passfeder (16.3) drehfest und axial verschieblich gehalten ist.

23. Linearantriebseinrichtung nach einem der Ansprüche 15 bis 22, **dadurch gekennzeichnet, dass** die Kraftschlusselemente Bremsringe (22, 23) mit kegeligen Reibschlussflächen (22.1, 23.1) sind.

24. Linearantriebseinrichtung nach einem der Ansprüche 15 bis 23, **dadurch gekennzeichnet, dass** hydraulische Kolben-/Zylindereinheiten (6, 8) in der festen Formaufspannplatte (2) angeordnet sind, bei denen die Enden der Holme (4) Kolben (6) aufweisen, die in Zylinderräumen (8, 9) der festen Formaufspannplatte (2) angeordnet sind.

25. Linearantriebseinrichtung nach einem der Ansprüche 15 bis 23, **dadurch gekennzeichnet, dass** die Schließkrafteinheit aus einer zweigeteilten beweglichen oder festen Formaufspannplatte besteht, bei der zwischen einer Formträgerplatte und einer Stützplatte ein hydraulisches Druckkissen in Form von einem oder mehreren hydraulischen Druckelementen angeordnet ist.

26. Kunststoff-Formmaschine mit einer Linearantriebseinrichtung nach einem der vorstehenden Ansprüche.

## Claims

1. Linear drive device for opening and closing moulds as well as applying a closing force thereon, in particular mould halves of a plastics material moulding machine, comprising a spindle drive acting on the moulds comprising a first spindle nut for opening and closing the moulds, a spindle, and a piston/cylinder unit acting on the moulds for the application of the closing force, **characterised in that** the piston/cylinder unit (113; 6, 8; 7, 9) acts on the moulds via a second spindle nut (108; 17) cooperating directly with the spindle.

2. Linear drive device according to claim 1, **characterised in that** during opening and closing of the moulds the second spindle nut (108; 17) is moved along the spindle (102; 4, 5) via the first spindle nut (106; 16) with little force, preferably in a free-running manner.

3. Linear drive device according to claim 1 or 2, **characterised in that** the spindle (102) is fixedly connected to the mould in the manner of a ram.

4. Linear drive device according to any one of claims 1 to 3, **characterised in that** the spindle (102) has a thread (104) for the second spindle nut (108), the thread groove of which is wider than the width of thread teeth (107) of the second spindle nut (108).

5. Linear drive device according to any one of claims 1 to 4, **characterised in that** the spindle (102) is double-threaded in design and, in addition to a thread (104) for the second spindle nut (108), has a further thread (103) for the first spindle nut (106).

6. Linear drive device according to claim 5, **characterised in that** the first spindle nut (106) is arranged on the spindle (102) at a spacing (a) next to the second spindle nut (108) and for torque transmission between the first spindle nut (106) and the second spindle nut (108), these are connected to one another via coupling elements (119), wherein the second spindle nut (108) is displaceable on the spindle (102), viewed in the longitudinal direction (L) thereof, relative to the first spindle nut (106).

7. Linear drive device according to claim 6, **characterised in that** the coupling elements (119) are designed as pins, each of which being inserted by its ends in holes (120, 121) in the mutually facing end faces (106a, 108a) of the first spindle nut (106) and the second spindle nut (108), the depth of the holes (120, 121) and the length of the pins being selected such that the second spindle nut (108) can be displaced on the spindle (102), viewed in the longitudinal direction (L) thereof, relative to the first spindle nut (106).

8. Linear drive device according to claim 6 or 7, **characterised in that** the first spindle nut (106) is supported on the second spindle nut (108) via spring elements (122).

9. Linear drive device according to claim 8, **characterised in that** the spring elements (122) formed as cup springs are arranged between the first spindle nut (106) and the second spindle nut (108).

10. Linear drive device according to any one of claims 1 to 9, **characterised in that** the first spindle nut (106) and the associated thread (103) are formed as a ball screw and the second spindle nut (108) and the associated thread (104) are formed as a flat screw drive, preferably as a trapezoidal screw drive.

11. Linear drive device according to any one of claims 1 to 10, **characterised in that** the piston/cylinder unit (113) consists substantially of a piston (114) and a cylinder space (115) in a housing (112) and the annular piston (114) has a sleeve-like pressure ram (116), through which the spindle (102) is guided.

12. Linear drive device according to claim 11, **characterised in that** the second spindle nut (108) is mounted via roller bearings (110) adjacent to the sleeve-like pressure ram (116) in a sleeve-like projection (111) arranged on the housing (112), wherein the second spindle nut (108) is displaceable for transmission of the closing force from the pressure ram (116) onto the spindle (102) in the longitudinal direction (L) of the spindle (102).

13. Linear drive device according to any one of claims 1 to 12, **characterised in that** a crown gear (117) is arranged on an end face (108a) of the second spindle nut (108) for a drive for the second spindle nut (108) via a belt (118) for opening and closing the moulds.

14. Linear drive device according to any one of claims 1 to 13, **characterised in that** the piston/cylinder unit (113) can be operated hydraulically.

15. Linear drive device according to claims 1, 2, 4, 5, 8, 13 or 14 comprising at least one movable and one fixed platen (2, 3) as moulds with a plurality of, preferably four, spindle drives (12, 13), wherein each spindle drive has a bar (4, 5) which is formed, at its end penetrating the movable platen (3), as a spindle (4.1) and wherein, with each spindle drive,
the bar (4, 5) is non-rotatably mounted in the fixed platen (2),
the first spindle nut (16) is non-rotatably coupled to the second spindle nut (17),
the second spindle nut (17) has engagement means, with which the second spindle nut (17) can be connected directly and in long line contact with the spindle (4.1), when building up the closing pressure,
the second spindle nut (17) is coupled to the rotary drive (14, 15),
the second spindle nut (17) is axially displaceably mounted in the movable platen (3) in bearings (18, 19),
the second spindle nut (17) is rigidly connected to a frictional connection element which can be non-rotatably coupled to a complementary frictional connection element of the movable platen (3) by axial displacement relative to the movable platen (3),
the first spindle nut (16) is axially supported on the second spindle nut (17) on the side remote from the movable platen (3) via a rigid stop (16.4) and via a first spring device (20) on the side facing the movable platen (3),
a second spring device (21), the spring force of which is greater than the spring force of the first spring device (20), is arranged between the outer bearing support of the bearings (18, 19) non-rotatably arranged in the movable platen (3), and the movable platen (3),
the spring force of the first spring device (20) is determined according to the condition that the first and the second spring device (20, 21) remain undeformed upon an opening and closing movement of the movable platen (3) effected via the spindle drive (12, 13), the second spindle (17) being positioned relative to the first spindle nut (16) by resting on a fixed stop (16.4), on the one hand, and resting on the undeformed first spring device (20), on the other hand, in such a way that the engagement means of the second spindle nut (17) disengage with respect to the spindle (4.1) and
the spring force of the second spring device (21) is determined according to the condition that when a closing force SK introduced via the spindle (4.1) becomes active, the first spring unit (20) is initially compressed, whereupon the second spindle nut (17) is displaced relative to the first spindle nut (16) in such a way that the engagement means of the second spindle nut (17) arrive in full force engagement with the spindle (4.1) and then the second spring device (21) is compressed, whereupon an axial displacement of the second spindle nut (17) takes place relative to the movable platen (3) accompanied by a non-rotational coupling of the force connection elements.

16. Linear drive device according to claim 15, **characterised in that** the engagement means of the second spindle nut (17) consist of a helix (24) which is arranged in helical grooves of the second spindle nut (17) and which can be connected by axial adjustment of the second spindle nut (17) in relation to the first spindle nut (16) either in full force connection or in a contactless manner to the thread grooves (27) of the spindle (4.1).

17. Linear drive device according to claim 15, **characterised in that** the engagement means of the second spindle nut consist, on the one hand, of interlocking thread profiles (25) of the second spindle nut (17), and the spindle (4.1), on the other hand.

18. Linear drive device according to claim 17, **characterised in that** the thread profiles (21) of the second spindle nut (17) and spindle (4.1) interlock in the form of a trapezoidal thread.

19. Linear drive device according to claim 17, **characterised in that** the thread profiles (25) of the second spindle nut (17) and spindle (4.1) interlock in the manner of a buttress thread.

20. Linear drive device according to any one of claims 15 to 19, **characterised in that** the spindle drive (12, 13) is a ball screw.

21. Linear drive device according to claim 15, **characterised in that** the first spindle nut (16) and the engagement means of the second spindle nut (17) engage with the same thread grooves of the spindle (4.1).

22. Linear drive device according to any one of claims 15 to 21, **characterised in that** the device for non-rotatable axial positioning or adjustment of the second spindle nut (17) in relation to the first spindle nut (16), consists of a conical tension element (28) by which a spindle nut ring (16.1) can be non-rotatably connected to the second spindle nut (17) and in which the first spindle nut (16) can be non-rotatably and axially displaceably held by means of a keyway (16.2) and fitted key (16.3).

23. Linear drive device according to any one of claims 15 to 22, **characterised in that** the force connection elements are brake rings (22, 23) with conical friction faces (22.1, 23.1).

24. Linear drive device according to any one of claims 15 to 23, **characterised in that** hydraulic piston/cylinder units (6, 8) are arranged in the fixed platen (2), in which the ends of the bars (4) have pistons (6) which are arranged in cylinder spaces (8, 9) of the fixed platen (2).

25. Linear drive device according to any one of claims 15 to 23, **characterised in that** the closing force unit consists of a split movable or fixed platen in which a hydraulic pressure pad in the form of one or more hydraulic pressure elements is arranged between a mould carrier plate and a support plate.

26. Plastics material moulding machine with a linear drive device according to any one of the preceding claims.

## Revendications

1. Dispositif d'entraînement linéaire pour l'ouverture et la fermeture d'outils de moulage ainsi que pour l'application d'une force de fermeture sur ce dernier, en particulier de moitiés d'outils de moulage d'une machine à mouler les matières plastiques, avec une commande à broche qui agit sur les outils de moulage avec un premier écrou de broche pour une ouverture et une fermeture des outils de moulage, avec une broche et avec une unité piston/vérin qui agit sur les outils de moulage pour l'application de la force de fermeture, **caractérisé en ce que** l'unité piston/vérin (113, 6, 8, 7, 9) agit sur les outils de moulage via un deuxième écrou de broche (108, 17) concourant directement avec la broche.

2. Dispositif d'entraînement linéaire selon la revendication 1, **caractérisé en ce que**, pendant l'ouverture et la fermeture des outils de moulage, le deuxième écrou de broche (108, 17) est déplacé avec peu de force, de préférence librement, le long de la broche (102, 4, 5).

3. Dispositif d'entraînement linéaire selon la revendication 1 ou 2, **caractérisé en ce que** la broche (102) est reliée à l'outil de moulage de façon rigide à la manière d'un poinçon.

4. Dispositif d'entraînement linéaire selon une des revendications 1 à 3, **caractérisé en ce que** la broche (102) comporte un pas de filet (104) pour le deuxième écrou de broche (108), dont la gorge de filet est plus large que la largeur de dents filetées (107) du deuxième écrou de broche (108).

5. Dispositif d'entraînement linéaire selon une des revendications 1 à 4, **caractérisé en ce que** la broche (102) est conçue à deux pas et comporte, outre un pas de filet (104) pour le deuxième écrou de broche (108), un autre pas de filet (103) pour le premier écrou de broche (106).

6. Dispositif d'entraînement linéaire selon la revendication 5, **caractérisé en ce que** le premier écrou de broche (106) est disposé sur la broche (102) avec un écart (a) à côté du deuxième écrou de broche (108) et **en ce que**, pour assurer la transmission du couple entre le premier écrou de broche (106) et le deuxième écrou de broche (108), ces derniers sont reliés l'un à l'autre via des éléments d'entraînement (119), le deuxième écrou de broche (108) pouvant coulisser sur la broche (102), vu dans le sens longitudinal de cette dernière par rapport au premier écrou de broche (106).

7. Dispositif d'entraînement linéaire selon la revendication 6, **caractérisé en ce que** les éléments d'entraînement (119) sont conçus sous la forme de chevilles dont chacune est emboîtée avec ses extrémités dans des perçages (120, 121) dans les faces tournées l'une vers l'autre (106a, 108a) du premier écrou de broche (106) et du deuxième écrou de broche (108), la profondeur des perçages (120, 121) et la longueur des chevilles étant choisies de manière à ce que le deuxième écrou de broche (108) puisse coulisser sur la broche (102), vu dans le sens longitudinal de cette dernière par rapport au premier écrou de broche (106).

8. Dispositif d'entraînement linéaire selon la revendication 6 ou 7, **caractérisé en ce que** le premier écrou de broche (106) s'appuie sur le deuxième écrou de broche (108) via des éléments à ressorts (122).

9. Dispositif d'entraînement linéaire selon la revendication 8, **caractérisé en ce que** les éléments à ressorts (122) conçus sous forme de ressorts à disques sont disposés entre le premier écrou de broche (106) et le deuxième écrou de broche (108).

10. Dispositif d'entraînement linéaire selon une des revendications 1 à 9, **caractérisé en ce que** le premier écrou de broche (106) et le pas de filet (103) correspondant sont conçus sous forme de vis d'entraînement à bille et **en ce que** le deuxième écrou de broche (108) et le pas de filet (104) correspondant sont de préférence conçus comme entraînement à filet trapézoïdal.

11. Dispositif d'entraînement linéaire selon une des revendications 1 à 10, **caractérisé en ce que** l'unité piston/vérin (113) est pour l'essentiel composée d'un piston (114) et d'un espace de vérin (115) dans un boîtier (112) et **en ce que** le piston de forme annulaire (114) comporte un plongeur en forme de douille (116) à travers lequel la broche (102) est guidée.

12. Dispositif d'entraînement linéaire selon la revendication 11, **caractérisé en ce que** le deuxième écrou de broche (108) est logé de manière adjacente au plongeur en forme de douille (116) dans une saillie en forme de douille (111) disposée sur le bâti (112) via des paliers à roulements (110), le deuxième écrou de broche (108) pouvant être déplacé dans le sens longitudinal (L) de la broche (102) pour transmettre la force de fermeture du plongeur (116) à la broche (102).

13. Dispositif d'entraînement linéaire selon une des revendications 1 à 12, **caractérisé en ce que** sur une face (108a) du deuxième écrou de broche (108) une roue plate (117) est disposée pour un entraînement pour le deuxième écrou de broche (108) via une courroie (118) pour une ouverture et fermeture des outils de moulage.

14. Dispositif d'entraînement linéaire selon une des revendications 1 à 13, **caractérisé en ce que** l'unité piston/vérin (113) peut être exploitée par hydraulique.

15. Dispositif d'entraînement linéaire selon les revendications 1, 2, 4, 5, 8, 13 ou 14 avec au moins une plaque de serrage mobile et fixe (2,3) comme outils de moulage avec plusieurs, de préférence quatre, commandes à broche (12, 13), chaque commande à broche comportant une barre (4, 5) qui est conçue comme broche (4.1) à son extrémité qui traverse la plaque de serrage des moules mobile (3), sachant que pour chaque commande à broche
- la barre (4, 5) est logée dans la plaque de serrage des moules (2) de manière à résister à la torsion,
- le premier écrou de broche (16) est couplé avec le deuxième écrou de broche (17) de manière à résister à la torsion,
- le deuxième écrou de broche (17) comporte des organes d'engrènement avec lesquels le deuxième écrou de broche (17) peut être relié à la broche (4.1) directement et avec un contact de ligne long pendant la montée de la pression de fermeture,
- le deuxième écrou de broche (17) est couplé avec l'entraînement de rotation (14, 15),
- le deuxième écrou de broche (17) dans la plaque de serrage des moules mobile (3) est logé dans des paliers (18, 19) de manière à pouvoir être déplacé axialement,
- le deuxième écrou de broche (17) est relié de manière fixe à un élément d'adhérence qui peut être couplé avec un élément d'adhérence complémentaire de la plaque de serrage des moules mobile (3) par déplacement axial par rapport à la plaque de mobile de serrage des moules (3) de manière à être protégé contre la torsion,
- le premier écrou de broche (16) sur le deuxième écrou de broche (17) sur la face opposée à la plaque de serrage des moules mobile (3) est soutenu axialement via une butée fixe (16.4) et, sur la face tournée vers la plaque de serrage des moules mobile (3), via un premier dispositif à ressorts (20),
- entre l'appui extérieur des paliers (18, 19) disposé dans la plaque de serrage des moules mobile (3) de manière à résister à la torsion et la plaque de serrage des moules mobile (3), un deuxième dispositif à ressorts (21), dont la force de tension de ressort est supérieure à la force de tension de ressort du premier dispositif à ressorts (20), est disposé,
- la force de tension de ressort du premier dispositif à ressorts (20) est déterminée de manière à ce que, lors d'un mouvement d'ouverture et de fermeture de la plaque de serrage des moules mobile (3) effectué par le biais de la commande à broche (12, 13), le premier et le deuxième dispositif à ressorts (20, 21) ne subissent pas de déformation, le deuxième écrou de broche (17) étant positionné en face du premier écrou de broche (16) par contact avec la butée fixe (16.4) d'une part et par contact avec le premier dispositif à ressorts (20) d'autre part, de telle manière que les organes d'engrènement du deuxième écrou de broche (17) ne s'engrènent pas dans la broche (4.1) et
- la force de tension de ressort du deuxième dispositif à ressorts (21) est déterminée de manière à ce que, lorsqu'une force de fermeture SK exercée via la broche (4.1) agit en comprimant d'abord la première unité à ressorts (20), suite à quoi le deuxième écrou de broche (17) se déplace par rapport au premier écrou de broche (16) de telle sorte que les organes d'engrènement du deuxième écrou de broche (17) adhèrent complètement avec la broche (4.1) et que le deuxième dispositif à ressorts (21) soit ensuite comprimé, ce qui entraîne un déplacement axial du deuxième écrou de broche (17) par rapport à la plaque de serrage des moules mobiles (3) qui va de pair avec un couplage résistant à la torsion des éléments d'adhérence.

16. Dispositif d'entraînement linéaire selon la revendication 15, **caractérisé en ce que** les organes d'engrènement du deuxième écrou de broche (17) sont composés d'une spirale (24) qui est disposée dans des gorges hélicoïdales du deuxième écrou de broche (17) et qui, grâce au réglage axial du deuxième écrou de broche (17) par rapport au premier écrou de broche (16), peut être commuté avec les gorges de filet (27) de la broche (4.1), soi de manière à adhérer complètement, soi sans contact.

17. Dispositif d'entraînement linéaire selon la revendication 15, **caractérisé en ce que** les organes d'engrènement du deuxième écrou de broche sont composés de profils de pas (25) du deuxième écrou de broche (17) d'une part et de la broche (4.1) d'autre part qui s'engrènent l'un dans l'autre.

18. Dispositif d'entraînement linéaire selon la revendication 17, **caractérisé en ce que** les profils de pas (25) du deuxième écrou de broche (17) et de la broche (4.1) s'engrènent l'un dans l'autre à la manière d'un filet trapézoïdal.

19. Dispositif d'entraînement linéaire selon la revendication 17, **caractérisé en ce que** les profils de pas (25) du deuxième écrou de broche (17) et de la broche (4.1) s'engrènent l'un dans l'autre à la manière d'un filet en dent de scie.

20. Dispositif d'entraînement linéaire selon une des revendications 15 à 19, **caractérisé en ce que** la commande à broche (12, 13) est une commande à broche à billes.

21. Dispositif d'entraînement linéaire selon la revendication 15, **caractérisé en ce que** le premier écrou de broche (16) et les organes d'engrènement du deuxième écrou de broche (17) sont engrenés avec les mêmes gorges de filet de la broche (4.1).

22. Dispositif d'entraînement linéaire selon une des revendications 15 à 21, **caractérisé en ce que** le dispositif de positionnement et/ou d'ajustage axial résistant à la torsion du deuxième écrou de broche (17) par rapport au premier écrou de broche (16) est composé d'un élément de serrage conique (28) avec lequel une bague d'écrou de broche (16.1) peut être reliée de manière à résister à la torsion avec le deuxième écrou de broche (17) et dans lequel le premier écrou de broche (16) est maintenu résistant à la torsion et déplaçable axialement grâce à une rainure (16.2) et à un ressort d'ajustage (16.3).

23. Dispositif d'entraînement linéaire selon une des revendications 15 à 22, **caractérisé en ce que** les éléments d'adhérence sont des cylindres creux de frein (22, 23) dotés de surfaces d'adhérence (22.1, 23.1) coniques.

24. Dispositif d'entraînement linéaire selon une des revendications 15 à 23, **caractérisé en ce que** des unités piston/vérin hydrauliques (6, 8) dont les extrémités des barres (4) comportent des pistons (6) qui sont disposés dans les espaces à vérins (8, 9) de la plaque de serrage des moules fixe (2) sont disposées dans la plaque de serrage des moules fixe (2).

25. Dispositif d'entraînement linéaire selon une des revendications 15 à 23, **caractérisé en ce que** l'unité de force de fermeture est composée d'une plaque de serrage de moules mobile ou fixe en deux parties sur laquelle un coussin de pression hydraulique sous la forme d'un ou de plusieurs éléments de pression hydrauliques est disposé entre une plaque de support des moules et une plaque d'appui.

26. Machine à mouler les matières plastiques avec un dispositif d'entraînement linéaire selon une des revendications précédentes.
